# EUROPÄISCHE PATENTSCHRIFT

(11) **EP 0 373 206 B1**
(45) Veröffentlichungstag und Bekanntmachung des Hinweises auf die Patenterteilung: **10.11.1993**
(21) Anmeldenummer: 89905619.6
(22) Anmeldetag: 11.05.1989
(51) Int. Cl.: F16F 13/00, B60N 2/44, A43B 21/26

(54) **DÄMPFUNGSVORRICHTUNG FÜR STOSSBELASTUNGEN**
DAMPING DEVICE FOR ATTENUATING IMPACTS
DISPOSITIF D'AMORTISSEMENT D'IMPACTS

(30) Priorität: 13.05.1988 DE 3816400; 01.03.1989 DE 3906466
(43) Veröffentlichungstag der Anmeldung: 20.06.1990
(73) Patentinhaber: Polus, Michael, Dr., 90489 Nürnberg (DE)
(72) Erfinder: Polus, Michael, Dr., 90489 Nürnberg (DE)
(74) Vertreter: Böhme, Volker, Dipl.-Ing.
(86) Internationale Anmeldenummer: DE8900299
(87) Internationale Veröffentlichungsnummer: WO8911047

(56) Entgegenhaltungen:
- EP-A- 0 012 638
- EP-A- 0 219 786
- EP-A- 0 253 373
- DE-A- 2 948 408
- FR-A- 2 242 605
- FR-A- 2 517 526
- GB-A- 2 105 438
- LU-A- 55 979
- US-A- 2 535 080
- US-A- 3 680 912
- PATENT ABSTRACTS OF JAPAN, Band 7, Nr. 141 (M-223)(1286) 21 Juni 1983; & JP-A-5854249 (Toyoda) 31. März 1983
- PATENT ABSTRACTS OF JAPAN, Band 11, Nr.333 (M-637)(2780) 30 Oktober 1987; & JP-A-62113934 (Toyo Tire & Rubber Co.) 25. Mai 1987
- PATENT ABSTRACTS OF JAPAN, Band 8 Nr. 69 (M-286)(1509) 31 März 1984; & JP-A-58217837 (Nissan) 17. Dezember 1983

## Beschreibung

Die Erfindung betrifft eine energieabsorbierende Dämpfungsvorrichtung für Stoßbelastungen, bei der ein Grundkörper entlang einem seitlichen umlaufenden Stirnrand eine Außenseite bildet, aus elastisch verformbarem Material besteht, elastisch zusammendrückbar ist und eine mit Flüssigkeit gefüllte Kammer begrenzt, bei der im Grundkörper vorgesehene ventilfreie enge längliche Drosselkanäle von der Kammer ausgehen und an der Außenseite des Grundkörpers jeweils eine Außenmündung bilden, bei der die Außenmündung von einer elastisch dehnbaren, unter Flüssigkeitsdruck elastisch nachgebenen Membran überdeckt sind, die bei den Außenmündungen vom Grundkörper lose ist und rundum entlang der Außenseite abdichtend festgelegt ist, bei der der Grundkörper einen die Kammer umschließenden Wulst mit einem Kamm bildet, die Kammer die Form einer Mulde aufweist und die Mulde von einem Abdeckgebilde überspannt ist, und bei der der Grundkörper eine Stützfläche und eine Lastfläche bildet, die einander gegenüberliegen und in deren Richtung die Drosselkanäle im wesentlichen verlaufen.

Bei einer bekannten Dämpfungsvorrichtung dieser Art (DE-A 2 948 408) ist bei schräg abwärts gerichtetem Verlauf der Drosselkanäle die eine Stütz- bzw. Lastfläche schräg an einer Außenseite des Grundkörpers gebildet. Das Abdeckgebilde ist über ein metallisches Zwischenstück von dieser Stütz- und Lastfläche auf Abstand gehalten. Die Mulde ist von dem Grundkörper und einem metallischen Stützblock gebildet und die andere Last- bzw. Stützfläche ist kegelstumpfförmig. Die Membran begrenzt einen ausgeprägten Raum, d.h. sie weist beachtlichen Abstand von den Außenmündungen der Drosselkanäle auf. Auch ist diese Membran auf die nähere Umgebung der Außenmündungen beschränkt und endet mit beachtlichem Abstand vom Wulst des Grundkörpers bzw. vom Kamm dieses Wulstes. Bei dieser Dämpfungsvorrichtung ist nachteilig der Zusammenbau von Teilen aus elastisch verformbarem Material und metallischen Teilen, da dieser Verbund aufwendig ist und langdauernden Belastungen nur schlecht Stand hält. Der mit dieser Dämpfungsvorrichtung erreichbare Dämpfungsverlauf läßt sich wegen der Scherbeanspruchung des Grundkörpers, d.h. wegen des schrägen bzw. kegelstumpfförmigen Verlaufes der Drosselkanäle und der Stütz- bzw. Lastflächen nicht oder nur schwierig in einer erwünschten Weise berechnen und einstellen. Die Dämpfungsvorrichtung dient primär zur Dämpfung von Schwingungen bzw. Vibrationen.

Demgegenüber ist es Aufgabe der Erfindung, eine Dämpfungsvorrichtung der eingangs genannten Art zu schaffen, die weniger aufwendig ist. Die erfindungsgemäße Dämpfungsvorrichtung ist, diese Aufgabe lösend, dadurch gekennzeichnet, daß der Grundkörper bei radialem Verlauf der Drosselkanäle die eine Stütz- bzw. Lastfläche am Kamm des Wulstes bildet, das Abdeckgebilde von der Membran gebildet ist sowie an dieser Stütz- bzw. Lastfläche anliegt und der Grundkörper die Mulde bildet sowie die andere Last- bzw. Stützfläche eben ist, daß die Membran bei den Außenmündungen und bis zum Kamm des Wulstes am Grundkörper lose anliegt, und daß die Drosselkanäle an der die Mulde bildenden Last- oder Stützfläche des Grundkörpers einseitig offen vorgesehen sind und von der Abdeckgebilde-Membran überdeckt sind sowie daß die Drosselkanäle seitlich von, von dem Grundkörper gebildeten Graten begrenzt sind.

Die Energieabsorbierung erfolgt, indem durch die Energie eines Stoßes oder Schlages die Flüssigkeit durch die engen Drosselkanäle gedrückt wird und die elastische Membran gedehnt wird. Die Dämpfungsvorrichtung ist wenig raumaufwendig und vereinfacht, da statt vieler zusätzlicher Teile, wie Ringleitung, Gaspolster und Ventile nur die dehnbare Membran vorgesehen ist. Die Dämpfung erfolgt unter sukzessivem Energieabbau und ohne Schwingung. Die Dämpfungswirkung erfolgt anfangs nicht impulsartig stark, sondern allmählich ansteigend.

Bei der erfindungsgemäßen Dämpfungsvorrichtung handelt es sich um ein elastisches, hydraulisches Energieabsorptionssystem, bei dem aus der leistungsbezogen ausgeformten elastischen Kammer Flüssigkeit durch die Drosselkanäle ausgepreßt wird. Die ausgepreßte Flüssigkeit sammelt sich in der Membran und wird im Arbeitstakt in die Kammer zurückgeführt, die durch den Stoß bzw. Schlag gestaucht worden ist. Durch die Parameter: Elastizität, Volumen und Drosseln wird eine genau definierte Leistung bewirkt. Die bei Starren Systemen auftretenden trägheitsbedingten Spitzenkräfte sind vermieden. Die Dämpfungsvorrichtung läßt sich bei konstanter statischer Belastung als gedämpft schwingendes System nutzen.

Die Membran bzw. Folie besteht z.B. aus elastischem Kunststoff oder Kunstkautschuk. Der Grundkörper besteht z.B. aus geschlossenzelligem Polyurethan, Silikonkautschuk oder aus Moosgummi. Der Durchmesser der Drosselkanäle richtet sich nach der jeweiligen Verwendung der Dämpfungsvorrichtung und dem gewünschten Dämpfungsverlauf. Der Grundkörper ist in der Regel einstückig. Das erfindungsgemäße Gebilde ist, in einer Ebene gesehen, kreisrund, oval oder auch rechteckig. Eine größere Anzahl, z.B. mehr als drei Drosselkanäle, verbessern die Wirksamkeit der Dämpfungsvorrichtung.

Die erfindungsgemäße Dämpfungsvorrichtung ist auf einen von einer hohen Anfangsschwingung freien, allmählich ansteigenden Dämpfungsverlauf abgestimmt. Besonders zweckmäßig und vorteilhaft ist es, wenn der Grundkörper, die Drosselkanäle und die Membran auf einen parabelähnlichen Dämpfungsverlauf abgestimmt sind. Ein solcher Dämpfungsverlauf, d.h. eine solche in Abhängigkeit von der Zeit gemessene Kraft an der Stützfläche bei schlagartiger Belastung der Lastfläche ist für viele Anwendungsfälle bevorzugt.

Da die Kammer von einer Mulde des Grundkörpers und einem die Mulde überspannenden Bereich der Membran begrenzt ist, die sich über einen die Mulde bildenden Wulst bis über die Außenmündungen der Drosselkanäle erstreckt, strömt die flüssigkeit bei Beendigung des Schlages aus der bei den Drosselkanal-Außenmündungen befindlichen Auswölbung der Membran sehr rasch über den Wulst in die Kammer zurück.

Bei der erfindungsgemäßen Dämpfungsvorrichtung ist die Kammer von der Mulde begrenzt , die an der Stütz- oder der Lastfläche des Grundkörpers vorgesehen ist, sind die Drosselkanäle an der die Mulde bildenden Last- oder Stütsfläche des Grundkörpers einseitig offen vorgesehen und von einem Abdeckgebilde überdeckt und sind die Drosselkanäle seitlich von den, von dem Grundkörper gebildeten Graten begrenzt, deren Querschnitt sich zu deren freien Ende hin verringert. Es wird der Grundkörper unter Stoß weniger gewalkt und weniger im Durchmesser vergrößert. Die Reibung der Membran am Grundkörper bei den durch Belastung und Entlastung bedingten Formänderungen ist vermindert. Es ist gleichgültig, ob die Fläche, die mit der Mulde und den Graten bzw. Simsen versehen ist, die Lastfläche oder die Stützfläche ist und ob die Grate nach oben oder nach unten angeordnet sind. Das Material des Grundkörpers kann weniger weich und weniger kompressibel sein, so daß Verwalkung und Instabilität vermindert und praktisch vermieden sind. Die Grate werden bei Stoß oder Schlag Zusammengedrückt und über die Dimensionierung der Grate lassen sich Ausmaß und Verlauf der Energieabsorbierung verbessert berechnen und einstellen. Da der Grundkörper in der Regel in einer Ebene gesehen, rund oder oval ist, verlaufen die Grate in der Regel radial.

Besonders zweckmäßig und vorteilhaft ist es, wenn bei dem sich im Querschnitt zum freien Ende hin verjüngenden Graten die eine Gratflanke flacher ansteigt als die andere. Diese Grate legen sich bei Stoß oder Schlag zur Seite der steileren Flanke hin um, wodurch die Energieabsorbierung verbessert einstellbar ist. Der Effekt des Umlegens läßt sich durch Einstellung der steileren und der flacheren Flanke beeinflussen.

Besonders zweckmäßig und vorteilhaft ist es weiterhin, wenn die Grate an einer im wesentlichen planen Rumpffläche des Grundkörpers sitzen und die von der Rumpffläche wegragende Höhe der Grate sich in Richtung zum Außenrand der Rumpffläche unter Bildung der Mulde vergrößert. Hierbei sind die Drosselkanäle zunächst nur im Bereich der größten Grathöhe von dem Abdeckgebilde geschlossen und entfalten die Drosselkanäle nur in dem geschlossenen Bereich die drosselnde Wirkung. Mit wachsendem, durch den Stoß bedingten Eindruck erstreckt sich der Kanalschluß auch auf geringere Grathöhen, wodurch die drosselnd wirkende Länge der Drosselkanäle zunimmt.

Besonders zweckmäßig und vorteilhaft ist es sodann, wenn die Länge der Grate mindestens 1/3 des halben in Gratrichtung verlaufenden Durchmessers der Stütz- oder Lastfläche ausmacht. Ab dieser Mindestlänge der Grate haben die Drosselkanäle eine Länge, die bei einer Vielzahl von Anwendungsfällen brauchbare Ergebnisse liefert.

Besonders zweckmäßig und vorteilhaft ist es ebenfalls, wenn die Flüssigkeit Silikonöl ist. Das Silikonöl ist nicht toxisch und bei einem breiten Temperaturbereich von minus 70^{o} bis plus 200^{o} brauchbar. Die Dimensionierung der Energieabsorbierung ist bei Verwendung von Silikonöl vereinfacht.

Wenn die erfindungsgemäß mit den Graten versehene Dämpfungsvorrichtung einen gerichteten Kraftstoß erfährt, kommt es zu folgendem Ablauf:
Es kommt in der Flüssigkeit zu einem Druckaufbau, wodurch eine Beschleunigung der Flüssigkeit nach außen und ein Durchströmen der Grat-Struktur erfolgt. Gleichzeitig kommt es durch die äußere Belastung zu einer Verformung der Grat-Struktur, z.B. zu einer Einkrümmung der äußeren Gratkämme; die Durchflußwege werden mit zunehmender Belastung immer enger, es liegt Drosselfunktion vor und es ergibt sich ein Druckaufbau mit exponentiell gesteigertem Energieverbrauch.
Am Ende der Belastung sammelt sich der größte Teil der Flüssigkeit an der Außenseite des Grundkörpers; es liegt eine Ausdehnung der Membran vor.
Bei der anschließenden Entlastung richtet sich die Grat-Struktur sofort wieder auf; dies und die Kraft der ausgedehnten Membran führen die Flüssigkeit gleichlaufend mit der Entlastung In die Mulde zurück.

Die erfindungsgemäße Dämpfungsvorrichtung läßt sich mit besonderem Vorteil im Unterteil, Insbesondere im Hackenbereich, eines Schuhes anwenden. Die Dämpfungseinrichtung steigert den Benutzungskomfort des Schuhes mit einfachen Mitteln.

In der Zeichnung ist eine bevorzugte Ausführungsform der Erfindung dargestellt und zeigt
- Fig. 1 - 4: jeweils einen Querschnitt einer Dämpfungsvorrichtung für Stoßbelastungen, und zwar in verschiedenen Zuständen der Belastung und Entlastung,
- Fig. 5 - 7: jeweils einen Ausschnitt der Dämpfungsvorrichtung gemäß Fig. 1 bei verschiedenen Belastungszuständen von Graten und
- Fig. 8: den zeitabhängigen Kraftaufbau an einer Stützfläche der Dämpfungsvorrichtung mit stoßbelasteter Lastfläche.

Die hier erörterte Dämpfungsvorrichtung wird z.B. in einer Kopfstütze für einen Sitz eines Fahrzeuges angewendet. Die Kopfstütze wird oberhalb der Lehne des Sitzes angeordnet und stützt den Hinterkopf der sitzenden Person beim Zurückschlagen ab. Bei diesem Rückschlag ist die Dämpfung, die mit der hier erörterten Dämpfungsvorrichtung erreichbar ist, sehr erwünscht.

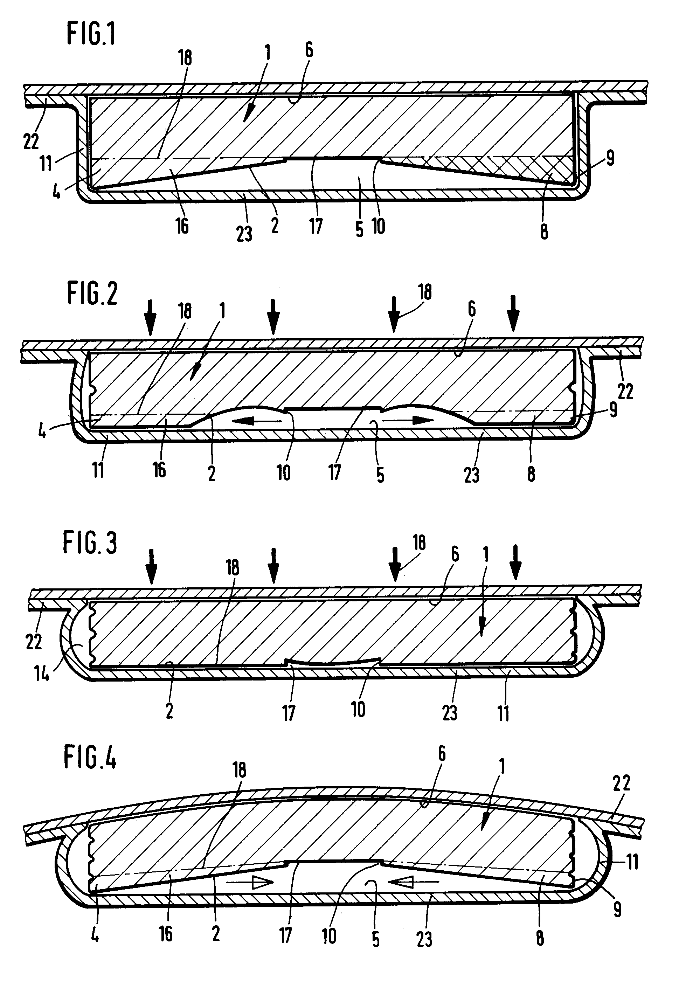

Die Dämpfungsvorrichtung gemäß Fig. 1 - 7 umfaßt einen elnstückigen Grundkörper 1, der einen kreisrunden Umfang aufweist und nach einer Seite eine unebene Stützfläche 2 bildet, die auf einem nicht gezeigten Untergrund aufliegt. Im Bereich der Stützfläche bildet der Grundkörper 1 einen unterbrochen umlaufenden Wulst 4, der eine muldenförmige Kammer 5 umschließt. Der Wulst 4 ist von radial verlaufenden Graten 16 gebildet, die mittig einen Nebenraum 17 aussparen und sich von innen zum Außenrand des Grundkörpers 1 in der Höhe relativ zu einer ebenen Rumpffläche 18 stetig vergrößern. Auf der der Stützfläche 2 gegenüberliegenden Seite des Grundkörpers 1 ist eine ebene Lastfläche 6 vorgesehen, auf die ein nicht näher gezeigtes Lastteil gemäß Pfeilen 18 einwirken kann. An der Oberfläche des Grundkörpers 1 sind eine Vielzahl von geraden, radial verlaufenden, länglichen, einseitig offenen Drosselkanälen 8 vorgesehen, die an dem äußeren Stirnrand des Grundkörpers jeweils eine Außenmündung 9 bilden und deren Innenmündung 10 sich im Mittenbereich der muldenförmigen Kammer 5 an deren Grund bei dem Nebenraum 17 befinden. Es ist eine Membran 11 vorgesehen, die an der Lastfläche 6 flächig flüssigkeitsdicht befestigt ist. Die Membran 11 erstreckt sich über den äußeren Stirnrand des Grundkörpers 1 und die darin vorgesehenen Außenmündungen 9 und ist lose von dem Stirnrand. Die Membran 11 ist gemäß Fig. 1 etwas locker und weist gegenüber der Stirnseite des Grundkörpers etwas Spiel auf und besitzt auch gegenüber den Kamm des Wulstes 4 Spiel.

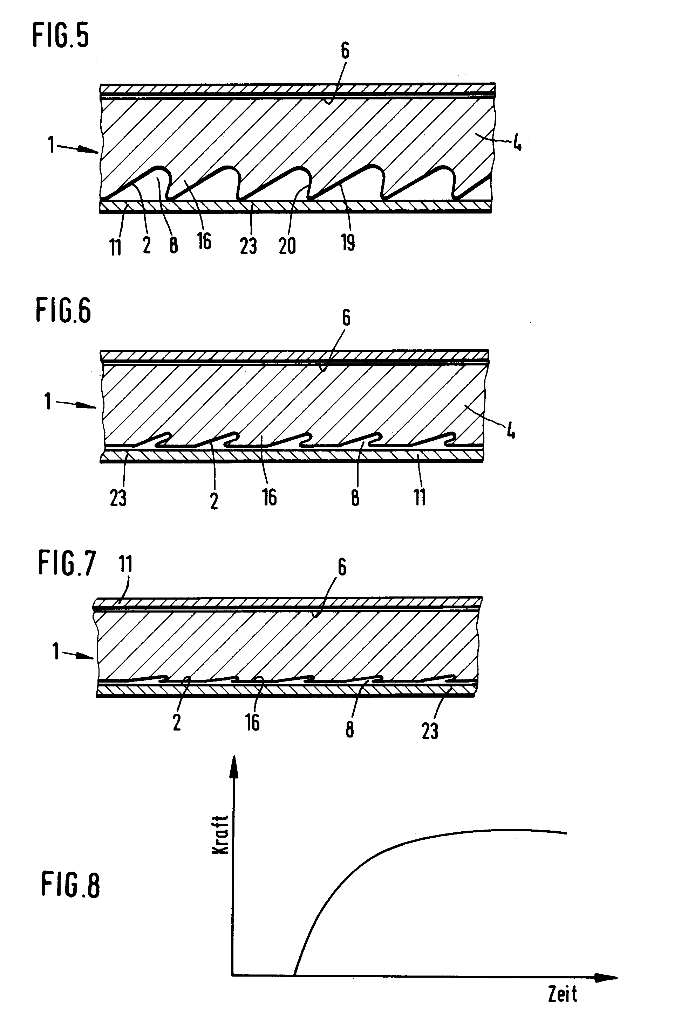

Die Drosselkanäle 8 sind jeweils seitlich von je einem Grat 16 begrenzt, dessen Querschnitt aus Fig. 5 ersichtlich ist. Da die Grate 16 radial verlaufen, nimmt ihre umfangsmäßige Querschnittsabmessung von innen zum Außenrand des Grundkörpers 1 hin zu. Der Querschnitt jedes Grates 16 nimmt gemäß Fig. 1 zu dessen freien Ende bzw. Kamm hin ab. Die Abnahme ist gemäß Fig. 1 relativ stark und winkelig. Es ist auch ein abgerundeter oder trapezförmig abnehmender Querschnitt möglich. Jeder Grat 16 bildet eine flachgeneigte Flanke 19 und eine steilgeneigte Flanke 20.

Die Membran 11 erstreckt sich an dem Stirnrand des Grundkörpers nicht nur lose anliegend, sondern locker, mit Spiel 21 bis zum Kamm des Wulstes 4 und deckt sodann mit einem Bereich 12 die Kammer 5 ab. Die Kammer 5, die Drosselkanäle 8 und der Spiel-Raum 21 sind mit einer Flüssigkeit, z.B. Silikonöl, gefüllt. Wenn das Lastteil gemäß den Pfeilen 18 schlagartig bzw. stoßartig auf die Dämpfungsvorrichtung gemäß Fig. 1 einwirkt, dann wird der Grundkörper 1 samt dessen Graten 16 unter Materialkompression zusammengedrückt, wobei die Grate gemäß Fig. 6 und 7 verformt werden. Das Volumen der Kammer 5 wird vermindert und die Drosselkanäle 8 werden vom Außenrand des Grundkörpers 1 her radial nach innen wandernd abgeschlossen und im Querschnitt verengt. An den Außenmündungen 9 tritt Flüssigkeit aus, so daß die Membran 11 sich gemäß Fig. 3 zu einer umlaufenden Auswölbung 14 in radialer Richtung ausdehnt. Wenn gemäß Fig. 4 die Entlastung von dem Stoß stattfindet, fließt die Flüssigkeit durch die Drosselkanäle 8 zurück, die sich sehr rasch auf ihren vollen, wenn auch engen Querschnitt unter Aufrichtung der Grate 16 wieder hergestellt haben.

Gemäß Fig . 1 - 4 ist die Membran 11 aus einem scheibenförmigen Teil und einem napfförmigen Teil zusammengesetzt, die entlang einem umlaufenden Randbereich 22 dicht miteinander verschweist sind. Gemäß Fig. 1 - 4 ist ein die Kanäle 8 abdeckendes Abdeckgebilde 23 von einem Teil der Membran gebildet. Es ist denkbar in einer gemeinsamen umhüllenden Membran zwei oder mehr Grundkörper so aufeinander zu legen, daß die Grate des einen Grundkörpers an der ebenen Lastfläche des benachbarten Grundkörpers anliegen, wobei diese Lastfläche ein Abdeckgebilde darstellt.

In Fig. 8 ist die an der Stützfläche 2 gemessene, durch die Stoßbelastung gemäß den Pfeilen 13 verursachte Kraft in Abhängigkeit von der Zeit aufgetragen. Die Stoßbelastung wird gedämpft übertragen, d.h. sie gelangt ohne hohe Anfangsspitzen auf die Stützfläche 2 und geht stetig auf das Maximum zu.
¹ The lexical meaning of the German word *Rumpffläche* used here is "peneplain" in the geological sense. Its significance in the present context is unclear, and it has been taken to mean "body face" in the translation.

## Patentansprüche

1. Energieabsorbierende Dämpfungsvorrichtung für Stoßbelastungen, bei der ein Grundkörper (1) entlang einem seitlichen umlaufenden Stirnrand eine Außenseite bildet, aus elastisch verformbarem Material besteht, elastisch zusammendrückbar ist und eine mit Flüssigkeit gefüllte Kammer begrenzt,
bei der im Grundkörper (1) vorgesehene ventilfreie enge längliche Drosselkanäle (8) von der Kammer ausgehen und an der Außenseite des Grundkörpers (1) jeweils eine Außenmündung (9) bilden,
bei der die Außenmündung (9) von einer elastisch dehnbahren, unter Füssigkeitsdruck elastisch nachgebenden Membran überdeckt sind, die bei den Außenmündungen (9) vom Grundkörper (1) lose ist und rundum entlang der Außenseite abdichtend festgelegt ist,
bei der der Grundkörper (1) einen die Kammer umschließenden Wulst (4) mit einem Kamm bildet, die Kammer die Form einer Mulde (5) aufweist und die Mulde (5) von einem Abdeckgebilde (23) überspannt ist, und bei der der Grundkörper (1) eine Stützfläche und eine Lastfläche bildet, die einander gegenüberliegen und in deren Richtung die Drosselkanäle (8) im wesentlichen verlaufen,
dadurch gekennzeichnet,
daß der Grundkörper (1) bei radialem Verlauf der Drosselkanäle (8) die eine Stütz- bzw. Lastfläche (2, 6) am Kamm des Wulstes (4) bildet, das Abdeckgebilde (23) von der Membran gebildet ist sowie an dieser Stütz- bzw. Lastfläche (2,6) anliegt und der Grundkörper (1) die Mulde (5) bildet sowie die andere Last- bzw. Stützfläche (2, 6) eben ist,
daß die Membran (11) bei den Außenmündungen (9) und bis zum Kamm des Wulstes (4) am Grundkörper (1) lose anliegt, und daß die Drosselkanäle (8) an der die Mulde bildenden Last- oder Stützfläche (2, 6) des Grundkörpers (1) einseitig offen vorgesehen sind und von der Abdeckgebilde-Membran (23) überdeckt sind sowie daß die Drosselkanäle (8) seitlich von, von dem Grundkörper (1) gebildeten Graten (16) begrenzt sind.

2. Dämpfungsvorrichtung nach Anspruch 1, dadurch gekennzeichnet, daß der Grundkörper (1), die Drosselkanäle (8) und die Membran (11) auf einen parabelähnlichen Dämpfungsverlauf abgestimmt sind.

3. Dämpfungsvorrichtung nach Anspruch 1 oder 2, dadurch gekennzeichnet, daß der Querschnitt der Grate (16) sich zu deren freien Ende hin verringert.

4. Dämpfungsvorrichtung nach Anspruch 3, dadurch gekennzeichnet, daß bei den sich im Querschnitt zum freien Ende hin verjüngenden Graten (16) die eine Gratflanke (19) flacher ansteigt als die andere (20).

5. Dämpfungsvorrichtung nach Anspruch 3 oder 4, dadurch gekennzeichnet, daß die Grate (16) an einer im wesentlichen planen Rumpffläche (18) des Grundkörpers (1) sitzen und die von der Rumpffläche (18) wegragende Höhe der Grate (16) sich in Richtung zum Außenrand der Rumpffläche unter Bildung der Mulde vergrößert.

6. Dämpfungsvorrichtung nach Anspruch 3, 4 oder 5, dadurch gekennzeichnet, daß die Länge der Grate (16) mindestens 1/3 des halben in Gratrichtung verlaufenden Durchmessers der Stütz- oder Lastfläche (2, 6) ausmacht.

7. Dämpfungsvorrichtung nach einem der vorhergehenden Ansprüche, dadurch gekennzeichnet, daß die Flüssigkeit Silikonöl ist.

8. Dämpfungsvorrichtung gemäß einem der Ansprüche 1 bis 7 im Unterteil, insbesondere im Hackenbereich, eines Schuhes.

## Claims

1. An energy-absorbing damping device for impact loading, wherein a main body (1) forms an outer side along a lateral continuous front edge, consists of resiliently deformable material, is resiliently compressible and defines a chamber filled with fluid,
wherein the narrow, elongate, valve-free throttle ducts (8) provided in the main body (1) start from the chamber and each form an external opening (9) on the outer side of the main body (1),
wherein the external opening (9) [is] covered by a resiliently extensible diaphragm yielding resiliently under fluid pressure and loose at the external openings (9) of the main body (1) and fixed in a sealing manner all round along the outer side,
wherein the main body (1) forms a bulge (4) enclosing the chamber and having a crest, the chamber is in the form of a hollow (5) and the hollow (5) is spanned by a cover structure (23),
and wherein the main body (1) forms a support face and a loading face, which are arranged opposite each other and the throttle ducts (8) extend substantially in the direction thereof,
**characterized in that** when the throttle ducts (8) extend radially the main body (1) forms one support and loading face (2, 6) on the crest of the bulge (4), the cover structure (23) is formed by the diaphragm and rests on the said support and loading face (2, 6) and the main body (1) forms the hollow (5) and the other loading and support face (2, 6) is flat,
the diaphragm (11) rests loosely on the main body (1) at the external openings (9) as far as the crest of the bulge (4),
and the throttle ducts (8) are provided open on one side on the loading or support face (2,6) of the main body (1) forming the hollow and are covered by the cover-structure diaphragm (23) [*sic*], and the throttle ducts (8) are bounded laterally by fins (16) formed by the main body (1).

2. A damping device according to Claim 1, **characterized in that** the main body (1), the throttle ducts (8) and the diaphragm (11) are adapted to a parabolic damping characteristic.

3. A damping device according to Claim 1 or 2, **characterized in that** the cross-section of the fins (16) decreases towards the free end thereof.

4. A damping device according to Claim 3, **characterized in that** in the fins (16) tapering in cross-section towards the free end one fin flank (19) rises less steeply than the other (20).

5. A damping device according to Claim 3 or 4, **characterized in that** the fins (16) are arranged on a substantially plane face¹ (18) of the main body (1), and the height of the fins (16) projecting away from the body face (18) increases in the direction towards the outer edge of the body face so as to form the hollow.

6. A damping device according to Claim 3, 4 or 5, **characterized in that** the length of the fins (16) is at least 1/3 of half the diameter of the support or loading face (2, 6) extending in the direction of the fins.

7. A damping device according to one of the preceding Claims, **characterized in that** the fluid is silicone oil.

8. A damping device according to one of Claims 1 to 7 in the lower part, in particular the heel area, of a shoe.

## Revendications

1. Dispositif d'amortissement absorbant de l'énergie, pour des sollicitations aux chocs, dans lequel un corps de base (1) forme un côté extérieur le long d'un bord frontal périphérique, est réalisé en un matériau déformable de manière élastique, et délimite une chambre remplie d'un liquide,
dans lequel des canaux d'étranglement (8) allongés et étroits, prévus dans le corps de base (1), partent de la chambre et forment chacun sur le côté extérieur du corps de base (1), un orifice extérieur (9),
dans lequel les orifices extérieurs (9) sont recouverts par une membrane qui peut s'allonger de manière élastique, qui peut s'écarter de manière élastique sous l'action de la pression du liquide, qui est détachée du corps de base (1) au niveau des orifices extérieurs (9), et qui est fixée de manière étanche sur le côté extérieur le long du périmètre,
dans lequel le corps de base (1) forme un bourrelet (4) en forme de peigne entourant la chambre, la chambre présentant une forme de cavité (5) et la cavité (5) étant recouverte par un élément de recouvrement (23), et dans lequel le corps de base (1) forme une surface d'appui et une surface de charge qui sont opposées l'une à l'autre et dans la direction desquelles s'étendent essentiellement les canaux d'étranglement (8),
caractérisé
en ce que le corps de base (1), avec une allure radiale des canaux d'étranglement (8), forme la surface d'appui ou de charge (2, 6) au niveau du peigne du bourrelet (4), que l'élément de recouvrement (23) est formé par la membrane et vient s'appliquer sur cette surface d'appui ou de charge (2, 6), et que le corps de base (1) forme la cavité (5), l'autre surface de charge ou d'appui (2, 6) étant plane,
en ce que la membrane (11) s'applique librement sur le corps de base (1) au niveau des orifices extérieurs (9) et jusqu'au peigne du bourrelet (4),
en ce que les canaux d'étranglement (8) sont prévus ouverts d'un côté, au niveau de la surface de charge ou d'appui (2, 6) du corps de base (1) formant la cavité (5), et sont recouverts par la membrane (23) formant élément de recouvrement, et
en ce que les canaux d'étranglement (8) sont délimités latéralement par des crêtes (16) formées par le corps de base (1).

2. Dispositif d'amortissement selon la revendication 1, caractérisé en ce que le corps de base (1), les canaux d'étranglement (8) et la membrane (11) sont adaptés les uns aux autres de manière à obtenir une allure d'amortissement parabolique.

3. Dispositif d'amortissement selon la revendication 1 ou 2, caractérisé en ce que la section transversale des crêtes (16) se réduit en direction de leur extrémité libre.

4. Dispositif d'amortissement selon la revendication 3, caractérisé en ce que les crêtes (16) qui se rétrécissent en section transversale en direction de leur extrémité libre, présentent un flanc de crête (19) moins en pente que l'autre (20).

5. Dispositif d'amortissement selon la revendication 3 ou 4, caractérisé en ce que les crêtes (16) sont situées sur une surface de corps (18) sensiblement plane du corps de base (1), et en ce que la hauteur des crêtes (16) faisant saillie de la surface de corps (18) s'agrandit en direction du bord extérieur de la surface de corps en formant la cavité.

6. Dispositif d'amortissement selon la revendication 3, 4 ou 5, caractérisé en ce que la longueur des crêtes (16) est au moins égale à 1/3 de la moitié du diamètre de la surface d'appui ou de charge (2, 6), s'étendant dans la direction des crêtes.

7. Dispositif d'amortissement selon l'une des revendications précédentes, caractérisé en ce que le liquide est une huile silicone.

8. Dispositif d'amortissement conforme à l'une des revendications 1 à 7, disposé dans la partie inférieure, notamment la région du talon, d'une chaussure.
